# EUROPÄISCHE PATENTANMELDUNG

(11) **EP 2 634 070 A1**
(43) Veröffentlichungstag der Anmeldung: **04.09.2013**
(21) Anmeldenummer: 12007980.1
(22) Anmeldetag: 28.11.2012
(51) Int. Cl.: B62D 15/02, G06K 9/68, G06T 7/00, G05D 1/00, G06K 9/32, B60R 21/00

(54) **Zielführungssystem für Kraftfahrzeuge**

(30) Priorität: 28.02.2012 DE 102012003992
(71) Anmelder: WABCO GmbH, 30453 Hannover (DE)
(72) Erfinder: Breuer, Karsten, 31867 Lauenau (DE); Dieckmann, Thomas, 30982 Pattensen (DE); Schade, Sven, 31171 Nordstemmen (DE); Stender, Axel, 31787 Hameln (DE); Stumberg, Ingo, 30625 Hannover (DE); Wiehen, Christian, 30938 Burgwedel (DE); Zielke, Frank, 30890 Barsinghausen (DE); Zimmermann, Marc, 30171 Hannover (DE)

(57) **Zusammenfassung**

Die Erfindung betrifft ein Zielführungssystem für Kraftfahrzeuge (1) für ein zielgenaues Heranfahren an ein stationäres Objekt (2), beispielsweise für Nutzfahrzeuge beim Rückwärtsandocken an eine Laderampe, einen Sattelauflieger, einen Anhänger oder dergleichen, mit wenigstens einer Kamera (7) am Heck (6) des Fahrzeugs (1) zum Erfassen der rückwärtigen Fahrzeugumgebung und einer charakteristischen, positionsbestimmenden Markierung am anzufahrenden stationären Objekt (2), sowie mit einer elektronischen Bildverarbeitungseinrichtung (8). Um mit einfachen Mitteln eine bessere Genauigkeit bei der Positionierung des Kraftfahrzeugs zu erreichen, ist vorgesehen, dass die charakteristische Markierung (3a, 3b) am anzufahrenden stationären Objekt (2) angebracht ist, dass die Informationen über die Geometrie dieser charakteristischen Markierung (3a, 3b) in der Bildverarbeitungseinrichtung (8) abgespeichert ist, und dass die Bildverarbeitungseinrichtung (8) dazu eingerichtet ist, das ihr von der Kamera (7) übermittelte Bild von der charakteristischen Markierung (3a, 3b) am stationären Objekt (2) mit der abgespeicherten Geometrie der charakteristischen Markierung (3a, 3b) zu vergleichen, und weiter dazu eingerichtet ist, aus diesem Vergleich eine Lageinformation des Kraftfahrzeugs (1) relativ zum anzufahrenden stationären Objekt (2) zu ermitteln.

## Beschreibung

Die Erfindung betrifft ein Zielführungssystem für Kraftfahrzeuge für ein zielgenaues Heranfahren an ein stationäres Objekt, beispielsweise für Nutzfahrzeuge beim Rückwärtsandocken an eine Laderampe, einen Sattelauflieger, einen Anhänger oder dergleichen, mit wenigstens einer Kamera am Heck des Fahrzeugs zum Erfassen der rückwärtigen Fahrzeugumgebung und einer charakteristischen, positionsbestimmenden Markierung am anzufahrenden stationären Objekt, sowie mit einer elektronischen Bildverarbeitungseinrichtung.

Aus der DE 102 54 035 B4 ist ein Lastkraftwagen mit oder ohne Anhänger bzw. Auflieger bekannt, mit einer am hinteren Fahrzeugende angeordneten Ladehubbühne, die mittels einer Bedieneinheit betätigbar ist, sowie mit einer am hinteren Fahrzeugende angeordneten Rückblickkamera, die ein Bild eines hinter dem hinteren Fahrzeugende liegenden Überwachungsraums an einen Bildschirm sendet, der in einem Fahrerhaus des Fahrzeugs angeordnet ist. Um das Heranfahren an eine Verladestation zu vereinfachen, ist im oder am Bildschirm wenigstens eine Markierung angebracht, die so positioniert ist, dass das Fahrzeug beim Heranfahren an eine der Markierung zugeordneten Verladestation dann eine vorbestimmte Verladestellung aufweist, wenn im Bildschirm zwischen der Markierung und einer vorbestimmten, der Ladehubbühne zugewandten Ecke oder Kante der Verladestation eine Überdeckung erreicht ist. Die Markierungen verschiedener Verladestationen lassen sich speichern.

Aus der DE 10 2008 046 215 A1 ist ein Verfahren zur Ankopplung eines Elektrofahrzeugs an eine Batterieladestation mittels eines Fahrzeugassistenzsystems bekannt, das zumindest eine Kamera zum Erfassen der Umgebung des Fahrzeugs, eine Bildverarbeitungseinrichtung und eine Anzeigevorrichtung umfasst. Am Fahrzeug und an der Batterieladestation sind miteinander zu verbindende Ankopplungsvorrichtungen angebracht, die von der Kamera erfasst und auf der Anzeigevorrichtung dargestellt werden. Mittels der Bildverarbeitungseinrichtung werden auf die Anzeigevorrichtung Rangierhilfslinien zur Unterstützung des Ankopplungsvorgangs eingeblendet.

Die in der DE 102 54 035 A1 erwähnte Rückblickkamera gibt dem Fahrer nur ein einfaches zweidimensionales Bild des hinter dem hinteren Fahrzeugende liegenden Überwachungsraums, das kaum Informationen über die räumlichen Verhältnisse enthält und daher, insbesondere bei ungünstigen Lichtverhältnissen, schwierig zu interpretieren und somit fehlerträchtig ist, oder aufwendige Sensoriksysteme erfordern, die technisch, wie bei dem Verfahren gemäß der DE 10 2008 046 215 A1, sehr aufwendig sind.

Vor diesem Hintergrund liegt der Erfindung die Aufgabe zugrunde, ein Zielführungssystem für Kraftfahrzeuge vorschlagen, das es mit einfachen Mitteln erlaubt, eine bessere Genauigkeit beim Annähern und der Positionierung des Fahrzeugs an ein stationäres Objekt auch bei ungünstigen Lichtverhältnissen zu erreichen.

Demnach geht die Erfindung aus von einem Zielführungssystem für Kraftfahrzeuge für ein zielgenaues Heranfahren an ein stationäres Objekt, beispielsweise für Nutzfahrzeuge beim Rückwärtsandocken an eine Laderampe, einen Sattelauflieger, einen Anhänger oder dergleichen, mit wenigstens einer Kamera am Heck des Fahrzeugs zum Erfassen der rückwärtigen Fahrzeugumgebung und einer charakteristischen, positionsbestimmenden Markierung am anzufahrenden stationären Objekt, sowie mit einer elektronischen Bildverarbeitungseinrichtung.

Zur Lösung der gestellten Aufgabe ist bei diesem Zielführungssystem außerdem vorgesehen, dass die charakteristische Markierung am anzufahrenden stationären Objekt angebracht ist, dass die Informationen über die Geometrie dieser charakteristischen Markierung in der Bildverarbeitungseinrichtung abgespeichert ist, und dass die Bildverarbeitungseinrichtung dazu eingerichtet ist, das ihr von der Kamera übermittelte Bild von der charakteristischen Markierung am stationären Objekt mit der abgespeicherten Geometrie der charakteristischen Markierung zu vergleichen, und weiter dazu eingerichtet ist, aus diesem Vergleich eine Lageinformation des Kraftfahrzeugs relativ zum anzufahrenden stationären Objekt zu ermitteln.

Bei diesem Zielführungssystem ist unter dem Begriff Kraftfahrzeug vorzugsweise ein Nutzfahrzeug, allein oder als Lastzug bestehend aus einem Sattelschlepper und einem Sattelauflieger, oder ein Lastzug bestehend aus einem Motorwagen und einem Anhänger zu verstehen. Das Fahrzeugheck kann das Heck eines Motorwagens, eines Sattelschleppers, das Heck eines Sattelaufliegers oder eines Anhängers sein. Unter dem anzufahrenden stationären Objekt ist eine Laderampe oder ein Sattelauflieger oder ein Anhänger zu verstehen. Der Begriff Andocken umfasst das Heranfahren bis zum Fahrzeugstillstand an eine Laderampe zum Beladen oder Entladen, das Ankuppeln eines Sattelaufliegers an einen Sattelschlepper, das Ankuppeln einer Anhängerdeichsel eines Anhängers an einen Motorwagen oder das Aufnehmen einer Wechselbrücke mit einer Lafette.

Das Zielführungssystem gemäß der Erfindung benötigt nur eine kostengünstige Sensorik, die eine eindeutige Mustererkennung auch bei unterschiedlichen Lichtverhältnissen erlaubt. Verschiedene Zielpositionen lassen sich standardisieren und ergeben eine hohe Reproduzierbarkeit der Anfahrmanöver, insbesondere beispielsweise eine gute Abdichtung von Kühltransportern an Rolltoren von Kühlhäusern aufgrund geringer Lagetoleranzen sowie ein schnelleres und verbessertes Rückwärtsrangieren mit mehr Sicherheit und weniger Schäden. Optional kann die Kamera durch eine bedarfsweise zusätzlich anzuschaltende Lampe am Kraftfahrzeugheck ergänzt werden, sofern ein Rückwärtsscheinwerfer am Kraftfahrzeug zur Beleuchtung dessen rückwärtigen Bereichs nicht ausreicht um, die charakteristischen Markierung am stationären Objekt genügend zu beleuchten.

Gemäß einer Weiterbildung dieses Zielführungssystems ist vorgesehen, dass die Bildverarbeitungseinrichtung dazu eingerichtet ist, Daten bezüglich des Abstandes und der Lage des Kraftfahrzeugs mit Bezug auf die charakteristische Markierung am anzufahrenden stationären Objekt zu erlernen sowie in einen elektronischen Speicher abzuspeichern, und diese gelernten Daten nachfolgend beim Anfahren eines mit der charakteristischen Markierung versehenen stationären Objekts zur Zielführung aus dem Speicher abzurufen. Der Bildverarbeitungseinrichtung sind entweder vorprogrammierte oder selbsttätig erlernte unterschiedliche charakteristische Markierung von unterschiedlichen stationären Objekten bekannt, die sie auf den von der Kamera aufgenommenen Bildern wieder finden kann, und bei deren Erkennung sie die Lageinformation, beispielsweise einen seitlichen Versatz und einen Abstand zum Ziel, eindeutig und mit geringen Toleranzen bestimmen kann.

Die Bildverarbeitungseinrichtung kann mit einer Anzeigevorrichtung im Blickfeld des Fahrzeugführers verbunden sein, auf der die festgestellte Lageinformation, beispielsweise der Abstand und der seitliche Versatz, mit Bezug auf die charakteristische Markierung am anzufahrenden Objekt dargestellt ist.

Alternativ dazu kann die Bildverarbeitungseinrichtung mit einem Fahrerassistenzsystem verbunden sein, das dazu eingerichtet ist, die Zielführung an das mit der charakteristischen Markierung versehene stationäre Objekt unter Benutzung der von der Bildverarbeitungseinrichtung übermittelten Daten automatisch durchzuführen. Die Anzeigevorrichtung im Blickfeld des Fahrzeugführers und das Fahrerassistenzsystem können auch kombiniert sein, so dass der Fahrzeugführer die automatische Zielführung auf der Anzeigevorrichtung verfolgen kann.

Wesentlich ist, dass der Bildverarbeitungseinrichtung die an einem stationären Objekt angeordnete charakteristische Markierung bekannt ist, die sie auf den von der Rückblickkamera aufgenommenen Bildern wieder finden kann. Damit lassen sich Rangieraufgaben für den Fahrzeugführer erleichtern oder sogar vollständig automatisieren. Bei einer solchen Rangieraufgabe handelt es sich beispielsweise um eine Anfahrt an eine Laderampe, ein Ladedock oder ein Ladetor, das Aufnehmen einer Wechselbrücke, das Aufsatteln eines Sattelaufliegers, das Ankoppeln eines Anhängers an einen Motorwagen, das Aufnehmen einer Wechselbrücke oder das Rückwärtseinfahren in eine Park- oder Ladeposition. Erfindungswesentlich ist das in der Bildverarbeitungseinrichtung abgespeicherte Musterbild der charakteristischen Markierung an dem stationären Objekt, aus dem im Vorfeld Daten zu Abstand und Lage erlernt wurden, die sich nun einfach abrufen lassen. Ebenso lassen sich aufgrund der bekannten Mustergeometrie und/oder Mustergröße während der Annäherung an das stationäre Objekt leicht die benötigten Werte von Abstand und Lage berechnen.

Im Einzelnen kann die am anzufahrenden stationären Objekt angebrachte charakteristische Markierung beispielsweise aus scharf konturierten, kontrastreichen, schwarzen, geometrisch angeordneten Rechteckblöcken, Strichen und/oder Kreisen und Punkten auf einem weißen Hintergrund oder umgekehrt aus weißen geometrischen Elementen auf einem schwarzen Hintergrund bestehen.

Alternativ dazu kann vorgesehen sein, dass die am anzufahrenden stationären Objekt angebrachte charakteristische Markierung beispielsweise aus scharf konturierten, kontrastreichen, weißen, geometrisch angeordneten Rechteckblöcken, Strichen, Kreisen und/oder Punkten auf einem schwarzen Hintergrund besteht.

Eine weitere Variante besteht darin, die am anzufahrenden stationären Objekt angebrachte charakteristische Markierung als QR-Code® auszubilden oder durch einen solchen QR-Code® zu ergänzen. Auf diese Weise können zusätzliche Informationen, die im QR-Code® verschlüsselt dargestellt sind, vom anzufahrenden stationären Objekt an das Fahrzeug übermittelt werden.

Beispielsweise besteht eine an einem anzufahrenden stationären Objekt angeordnete charakteristische Markierung aus einem Punkt in der Mitte eines diesen umgebenden Kreises, jeweils zwei beiderseits des Kreises angeordneten, beabstandeten, parallelen Rechteckblöcken, jeweils einem vom Zwischenraum zwischen den Rechteckblöcken ausgehenden, auf der einen Seite des Kreises nach unten und auf der anderen Seite des Kreises nach oben ragenden gleich großen Rechteckblock, sowie einem vom nach oben ragenden Rechteckblock ausgehenden Querstrich oberhalb der parallelen Rechteckblöcke und des Kreises. Eine solche charakteristische Markierung ist für die Kamera des Kraftfahrzeugs auch bei ungünstigen Lichtverhältnissen sehr gut erkennbar sowie identifizierbar, und mit anderen Elementen am anzufahrenden stationären Objekt unverwechselbar. Außerdem kann aus der Anordnung der geometrischen Elemente auf den Abstand zwischen dem Kraftfahrzeug und dem anzufahrenden stationären Objekt sowie auf eine Schrägstellung des Kraftfahrzeugs gegenüber der Zielposition in unterschiedlichen räumlichen Achsen geschlossen werden.

Die Erfindung wird nachstehend anhand eines in der Zeichnung dargestellten Ausführungsbeispiels weiter erläutert. In der Zeichnung zeigt
Fig. 1 eine schematische Seitenansicht auf ein als Nutzfahrzeug ohne Anhänger ausgebildetes Kraftfahrzeug beim Anfahren an ein als Verladerampe ausgebildetes, stationäres Objekt,
Fig. 2 eine Ansicht einer ersten charakteristischen Markierung zur Anordnung an einem stationären Objekt, und
Fig. 3 eine Ansicht einer zweiten charakteristischen Markierung zur Anordnung an einem stationären Objekt.

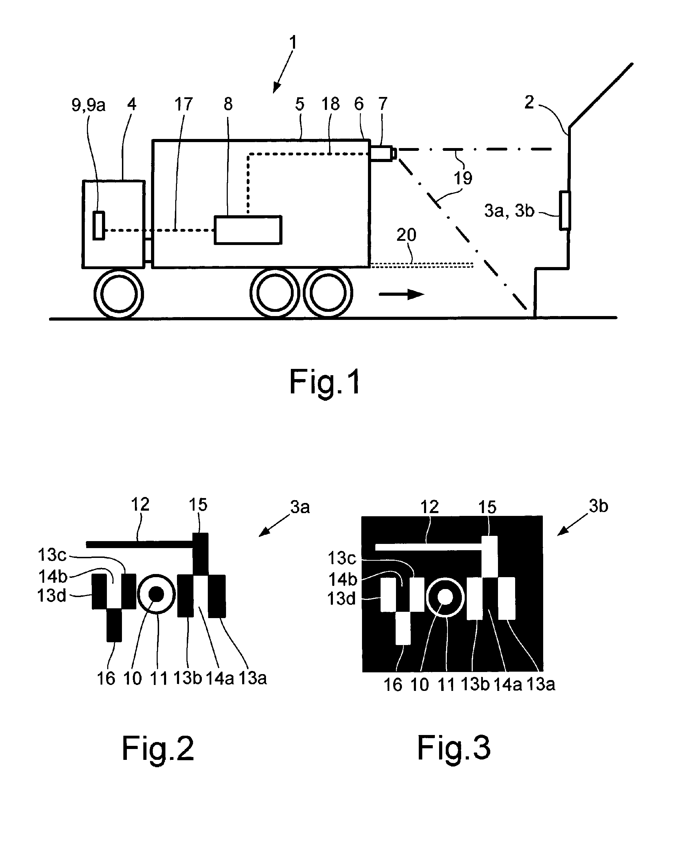

In Fig. 1 ist demnach ein Kraftfahrzeug 1 in einer Rückwärtsfahrsituation dargestellt, in der es sich an ein anzufahrendes stationäres Objekt 2 nähert. Im dargestellten Ausführungsbeispiel ist das stationäre Objekt 2 eine Laderampe, an die das Kraftfahrzeug 1 zum Beladen oder Entladen andocken kann. Am anzufahrenden stationären Objekt 2, beispielsweise am Rolltor der Laderampe, ist eine charakteristische, positionsbestimmende Markierung 3a, 3b angebracht, die von einer Kamera 7 am Fahrzeugheck 6 aufgenommen und deren Bild über eine geeignete Sensorleitung 18 an eine Bildverarbeitungseinrichtung 8 geleitet wird. Die Kamera 7 verfügt über ein Sichtfeld 19, welches das anzufahrende stationäre Objekt 2 erfasst. Am Fahrzeugheck 6 ist eine Ladeklappe 20 angeordnet, mit der in bekannter Weise der Laderaum 5 des Kraftfahrzeugs 1 verschlossen oder geöffnet werden kann. Ein Führerhaus 4 befindet sich am zum Fahrzeugheck 6 entgegengesetzten Ende des Kraftfahrzeugs 1.

Die Bildverarbeitungseinrichtung 8 vergleicht das von der Kamera 7 aufgenommene Bild der charakteristischen positionsbestimmenden Markierung 3a, 3b mit wenigstens einem abgespeicherten Bild von bekannten charakteristischen positionsbestimmenden Markierungen und kann bei dessen Erkennung die Lageinformation, insbesondere einen seitlichen Versatz und den Abstand zum anzufahrenden stationären Objekt 2 eindeutig sowie mit geringen Toleranzen bestimmen. Diese Information wird über eine geeignete Datenleitung 17 an eine Anzeigevorrichtung 9 im Führerhaus 4 und/oder an ein Fahrerassistenzsystem 9a weitergeleitet.

Anhand der auf der Anzeigevorrichtung 9 erkennbaren Lageinformation kann der Fahrzeugführer das Fahrzeug 1 rückwärts dirigieren und positionsgenau an dem anzufahrenden stationären Objekt 2 andocken. Damit lassen sich Rangieraufgaben für den Fahrzeugführer erleichtern oder sogar vollständig automatisieren, nämlich dann, wenn ein entsprechendes Fahrerassistenzsystem 9a im Kraftfahrzeug 1 vorhanden ist, welches anstelle der Anzeigevorrichtung 9 oder damit kombiniert sein kann.

Die in Fig. 2 dargestellte, für ein stationäres Objekt 2 charakteristische Markierung 3a besteht aus einem schwarzen Punkt 10 in der Mitte eines diesen umgebenden schwarzen Kreises 11, jeweils zwei beiderseits des Kreises 11 angeordneten, zueinander beabstandeten, parallelen schwarzen Rechteckblöcken 13a, 13b; 13c, 13d, jeweils einem vom weißen Zwischenraum 14a, 14b zwischen den Rechteckblöcken 13a, 13b; 13c, 13d ausgehenden, auf der einen Seite des Kreises 11 nach unten und auf der anderen Seite des Kreises 11 nach oben ragenden gleich großen Rechteckblock 15, 16, sowie einem von dem nach oben ragenden Rechteckblock 15 ausgehenden Querstrich 12 oberhalb der parallelen Rechteckblöcke 13a - 13d und des Kreises 11.

Diese charakteristische Markierung 3a aus den scharf konturierten, schwarzen und geometrisch angeordneten Rechteckblöcken 13a, 13b; 13c, 13d, 15, 16, dem Querstrich 12, dem Kreis 11 und dem Punkt 10 auf einem weißen Hintergrund ist durch die Bildverarbeitungseinrichtung 8 sehr gut, auch bei ungünstigen Lichtverhältnissen, identifizierbar. Daher lassen sich bei deren Erkennen durch die Bildverarbeitungseinrichtung 8 die Lageinformation, beispielsweise ein seitlicher Versatz und der Abstand zum Ziel, eindeutig und mit geringern Toleranzen bestimmen, indem Daten zu Abstand und Lage verwendet werden, die im Vorfeld eingelernt wurden und die sich einfach abrufen lassen, oder die sich aufgrund der bekannten geometrischen Verhältnisse stets aktuell bestimmen lassen.

In Fig. 3 ist als Alternative eine charakteristische Markierung 3b für ein stationäres Objekt 2 dargestellt, welche die gleichen geometrischen Elemente 10 bis 16 aufweist wie die charakteristische Markierung 3a gemäß Fig. 2, jedoch sind hier die geometrischen Elemente 10 bis 16 weiß vor schwarzen Hintergrund dargestellt.

## Patentansprüche

1. Zielführungssystem für Kraftfahrzeuge (1) für ein zielgenaues Heranfahren an ein stationäres Objekt (2), beispielsweise für Nutzfahrzeuge beim Rückwärtsandocken an eine Laderampe, einen Sattelauflieger, einen Anhänger oder dergleichen, mit wenigstens einer Kamera (7) am Heck (6) des Fahrzeugs (1) zum Erfassen der rückwärtigen Fahrzeugumgebung und einer charakteristischen, positionsbestimmenden Markierung am anzufahrenden stationären Objekt (2), sowie mit einer elektronischen Bildverarbeitungseinrichtung (8), **dadurch gekennzeichnet, dass** die charakteristische Markierung (3a, 3b) am anzufahrenden stationären Objekt (2) angebracht ist, dass die Informationen über die Geometrie dieser charakteristischen Markierung (3a, 3b) in der Bildverarbeitungseinrichtung (8) abgespeichert ist, und dass die Bildverarbeitungseinrichtung (8) dazu eingerichtet ist, das ihr von der Kamera (7) übermittelte Bild von der charakteristischen Markierung (3a, 3b) am stationären Objekt (2) mit der abgespeicherten Geometrie der charakteristischen Markierung (3a, 3b) zu vergleichen, und weiter dazu eingerichtet ist, aus diesem Vergleich eine Lageinformation des Kraftfahrzeugs (1) relativ zum anzufahrenden stationären Objekt (2) zu ermitteln.

2. Zielführungssystem nach Anspruch 1, **dadurch gekennzeichnet, dass** die Bildverarbeitungseinrichtung (8) dazu eingerichtet ist, Daten bezüglich des Abstandes und der Lage des Kraftfahrzeugs (1) mit Bezug auf die charakteristische Markierung (3a, 3b) am anzufahrenden stationären Objekt (2) zu erlernen sowie in einen elektronischen Speicher abzuspeichern, und diese gelernten Daten nachfolgend beim Anfahren eines mit der charakteristischen Markierung (3a, 3b) versehenen stationären Objekts (2) aus dem Speicher zur Zielführung abzurufen.

3. Zielführungssystem nach Anspruch 1 oder 2, **dadurch gekennzeichnet, dass** die Bildverarbeitungseinrichtung (8) mit einer Anzeigevorrichtung (9) im Blickfeld des Fahrzeugführers verbunden ist, auf der die festgestellte Lageinformation mit Bezug auf die charakteristische Markierung (3a, 3b) am anzufahrenden stationären Objekt (2) dargestellt wird.

4. Zielführungssystem nach Anspruch 3, **dadurch gekennzeichnet, dass** dieses derartig ausgebildet ist, dass an der Anzeigevorrichtung (9) als Lageinformation der Abstand und der seitliche Versatz des Kraftfahrzeugs (1) in Bezug zum anzufahrenden stationären Objekt (2) dargestellt wird.

5. Zielführungssystem nach einem der Ansprüche 1 bis 4, **dadurch gekennzeichnet, dass** die Bildverarbeitungseinrichtung (8) mit einem Fahrerassistenzsystem (9a) verbunden ist, das dazu eingerichtet ist, die Zielführung des Kraftfahrzeugs (1) an das mit der charakteristischen Markierung (3a, 3b) versehene stationäre Objekt (2) unter Benutzung der von der Bildverarbeitungseinrichtung (8) übermittelten Daten selbsttätig durchzuführen.

6. Zielführungssystem nach einem der Ansprüche 1 bis 5, **dadurch gekennzeichnet, dass** die am anzufahrenden stationären Objekt (2) angebrachte charakteristische Markierung (3a) aus scharf konturierten, kontrastreichen, schwarzen, geometrisch angeordneten Rechteckblöcken (13a, 13b; 13c, 13d, 15, 16), Kreisen (11), Strichen (12) und/oder Punkten (10) auf einem weißen Hintergrund besteht.

7. Zielführungssystem nach einem der Ansprüche 1 bis 5, **dadurch gekennzeichnet, dass** die am anzufahrenden stationären Objekt (2) angebrachte charakteristische Markierung (3b) aus scharf konturierten, kontrastreichen, weißen, geometrisch angeordneten Rechteckblöcken (13a, 13b; 13c, 13d, 15, 16), Kreisen (11), Strichen (12) und/oder Punkten (10) auf einem schwarzen Hintergrund besteht.

8. Zielführungssystem nach Anspruch 7, **dadurch gekennzeichnet, dass** die am anzufahrenden stationären Objekt (2) angebrachte charakteristische Markierung (3a, 3b) aus einem Punkt (10) in der Mitte eines diesen umgebenden Kreises (11), jeweils zwei beiderseits des Kreises (11) angeordneten, beabstandeten, parallelen Rechteckblöcken (13a, 13b; 13c, 13d), jeweils einem vom Zwischenraum (14a; 14b) zwischen den Rechteckblöcken (13a, 13b; 13c, 13d) ausgehenden, auf der einen Seite des Kreises (11) nach unten und auf der anderen Seite des Kreises (11) nach oben ragenden, gleich großen Rechteckblock (15, 16), sowie einem vom nach oben ragenden Rechteckblock (15) ausgehenden Querstrich (12) oberhalb der parallelen Rechteckblöcke (13a, 13b; 13c, 13d) und des Kreises (11) besteht.
